# EUROPÄISCHE PATENTSCHRIFT

(11) **EP 4 350 200 B1**
(45) Veröffentlichungstag und Bekanntmachung des Hinweises auf die Patenterteilung: **03.12.2025**
(21) Anmeldenummer: 22199470.0
(22) Anmeldetag: 04.10.2022
(51) Int. Cl.: F17C 3/08, F17C 3/10

(54) **KRYOTANKVORRICHTUNG MIT WÄRMETAUSCHER**
CRYOTANK APPARATUS WITH HEAT EXCHANGER
DISPOSITIF DE RÉSERVOIR CRYOGÉNIQUE AVEC ÉCHANGEUR DE CHALEUR

(43) Veröffentlichungstag der Anmeldung: 10.04.2024
(73) Patentinhaber: MAGNA STEYR Fahrzeugtechnik GmbH & Co KG, 8041 Graz (AT)
(72) Erfinder: HAMMER, Daniel, 8053 Graz (AT); KOTNIG, Claudio, 8302 Nestelbach (AT); STUBENRAUCH, Martin, 8142 Wundschuh (AT)
(74) Vertreter: Zangger, Bernd

(56) Entgegenhaltungen:
- EP-A1- 3 021 032
- US-A- 4 899 546
- US-A1- 2004 107 706
- US-A1- 2018 128 211

## Beschreibung

### Gebiet der Erfindung

Die vorliegende Erfindung betrifft eine Kryotankvorrichtung, umfassend einen Innenbehälter zur Aufnahme eines kryogenen Mediums, insbesondere von Wasserstoff.

### Stand der Technik

Kryotankvorrichtungen, die einen Innenbehälter zur Aufnahme von Wasserstoff umfassen, sind bekannt und werden insbesondere als mobile Kryotanksysteme, beispielsweise in Kraftfahrzeugen, eingesetzt. Ein solcher Kryotank umfasst üblicherweise einen Innenbehälter und ein Außengehäuse, wobei zwischen Innenbehälter und Außengehäuse ein isolierender Raum, somit ein Isolationsraum oder Vakuumraum, eingerichtet ist, in dem ein Vakuum bestehen kann oder sich beispielsweise ein Inertgas befinden kann, um eine gute thermische Isolation zu erreichen.

Das Medium in einer solchen Kryotankvorrichtung kann durch einen Wärmetauscher aufgewärmt werden, beispielsweise um das von Kryogentank entnommene tiefkalte Medium auf eine für einen Verbraucher, wie eine Brennstoffzelle bzw. einen Motor, zulässige Temperatur zu bringen.

Derartige Wärmetauscher können beispielsweise im Isolationsraum oder auch außerhalb des Außengehäuses angeordnet sein. Nachteilig ist dabei, dass ein solcher Wärmetauscher einen relativ großen Bauraum beansprucht und daher der für die übrigen Bauteile der Kryotankvorrichtung zur Verfügung stehende Bauraum reduziert wird. Insbesondere wird dadurch auch das für das kryogene Medium im Tank nutzbare Volumen verkleinert.

Aus dem Dokument US 2004/107706 A1 ist ein Speicherbehälter für kryogene Medien, insbesondere für flüssigen Wasserstoff, bekannt, mit einem Außenbehälter, einem Innenbehälter und mindestens einer Entnahme- und Befüllleitung, wobei im Speicherbehälter mindestens ein weiterer Speicherraum für ein Medium vorhanden ist und zumindest die Entnahmeleitung mit dem weiteren Speicherraum in Wirkverbindung steht.

Aus dem Dokument EP 3 021 032 A1 ist eine Vorrichtung zur Aufnahme eines Kryofluids bekannt, umfassend einen Druckbehälter mit einem allgemein-zylindrischen Mantel und einer an einer Stirnebene des Mantels ansetzenden Endkappe sowie einen an den Druckbehälter angeschlossenen Wärmetauscher zur Verdampfung des Kryofluids, wobei der Wärmetauscher im Wesentlichen stabförmig ist und normal zur Zylinderachse des Mantels an der Außenseite der Endkappe und außermittig zu dieser liegt.

### Zusammenfassung der Erfindung

Es ist eine Aufgabe der Erfindung, eine Kryotankvorrichtung der genannten Art in dieser Hinsicht zu verbessern und insbesondere eine Kryotankvorrichtung anzugeben, die eine Erwärmung des entnommenen Mediums erlaubt und dabei ein großes Speichervolumen für das kryogene Medium ermöglicht.

Die Lösung der Aufgabe erfolgt durch eine Kryotankvorrichtung mit den Merkmalen gemäß Anspruch 1.

Die Kryotankvorrichtung umfasst einen Innenbehälter zur Aufnahme eines kryogenen Mediums, insbesondere von Wasserstoff, und ein den Innenbehälter umgebendes Außengehäuse, wobei zwischen Innenbehälter und Außengehäuse ein Isolationsraum eingerichtet ist, wobei die Kryotankvorrichtung zumindest einen Wärmetauscher umfasst, wobei der Wärmetauscher zumindest eine Kaltstromleitung umfasst, die zur Durchströmung von dem im Innenbehälter aufgenommenen kryogenen Medium eingerichtet ist, wobei der Wärmetauscher zumindest eine Warmstromleitung umfasst, die zur Durchströmung von einem Temperiermedium eingerichtet ist, wobei die Kaltstromleitung und die Warmstromleitung entlang einer Wärmeübertragungsfläche derart miteinander in Kontakt, insbesondere thermisch verbunden, sind und/oder benachbart angeordnet sind, dass es zu einer Wärmeübertragung zwischen dem Temperiermedium und dem kryogenen Medium über die Wärmeübertragungsfläche kommt, wobei die Kaltstromleitung an der Innenseite des Außengehäuses angeordnet ist und die Warmstromleitung an der Außenseite des Außengehäuses angeordnet ist, so dass ein Abschnitt des Außengehäuses als Wärmeübertragungsfläche des Wärmetauschers wirkt.

Erfindungsgemäß wird ein Wärmetauscher in das Außengehäuse eines Kryotanks integriert. Das Außengehäuse des Kryotanks wird selbst als Wärmeübertragungsfläche eines Wärmetauschers genutzt. Das kryogene Medium strömt dabei - in einer Kaltstromleitung - innerhalb des Außengehäuses, während das benachbarte Temperiermedium, also das Wärmeträgermedium, an der Außenseite des Außengehäuses - in einer Warmstromleitung - strömt. Die Kaltstromleitung und die Warmstromleitung bilden daher zusammen mit dem Außengehäuse den Wärmetauscher aus.

Vorzugsweise wirkt nicht das gesamte Außengehäuse als Wärmeübertragungsfläche, sondern im Wesentlichen nur jener Teil des Außengehäuses, der sich im Bereich der Anordnung der Warmstromleitung und der Kaltstromleitung befindet. Vorzugsweise besteht also nur eine partielle Überdeckung des Außengehäuses mit einem Wärmetauscher. Es ist jedoch nicht ausgeschlossen, dass sich der Wärmetauscher über einen Großteil oder die gesamte Mantelfläche des Außentanks erstreckt.

Durch die Nutzung des Außengehäuses des Kryotanks als Wärmeübertragungsfläche eines Wärmetauschers wird eine besonders kompakte, integrierte Bauweise ermöglicht und eine Verringerung des benötigten Bauraums.

Zudem verbleibt das kryogene Medium im Inneren des Außengehäuses, während das Temperiermedium außerhalb des Außengehäuses verbleibt. Dadurch wird die Gefahr einer Verunreinigung des Vakuumraums bzw. Isolationsraums mit dem Wärmeträgermedium, also dem Temperiermedium, verringert.

Erfindungsgemäß bezieht die Warmstromleitung Wärme von einer Wärmequelle, beispielsweise als Abwärme einer anderen Komponente, wobei ein Kreislauf des Temperiermediums durch die Warmstromleitung durch eine Wärmeträgerpumpe aufrecht gehalten wird.

Im Isolationsraum kann sich dabei bevorzugt ein Vakuum und/oder ein Inertgas und/oder eine Multi-Layer-Insulation (MLI) befinden.

Weiterbildungen der Erfindung sind in den abhängigen Ansprüchen, der Beschreibung sowie den beigefügten Zeichnungen angegeben.

Vorzugsweise bildet das Außengehäuse zumindest einen Sektor in Umfangsrichtung der Kaltstromleitung und/oder der Warmstromleitung aus. Das Außengehäuse wird somit nicht nur als Wärmeübertragungsfläche des Wärmetauschers genutzt, sondern bildet gleichzeitig die Kaltstromleitung und/oder die Warmstromleitung teilweise, nämlich sektorweise, also in Teilen deren Umfangs, aus, somit die erforderlichen Kanäle des Wärmetauschers. Die Kaltstromleitung und / oder Warmstromleitung kann alternativ als separate, zusätzlich am Außengehäuse - innen und/oder außen - angeordnete komplette Leitung ausgebildet sein.

Bevorzugt ist die Kaltstromleitung und/oder die Warmstromleitung zumindest abschnittsweise durch das Außengehäuse und durch ein das Außengehäuse bereichsweise umgebendes Gehäuse gebildet. Das Gehäuse kann an der Innenseite und/oder an der Außenseite des Außengehäuses ausgebildet sein und bildet zusammen mit dem Außengehäuse die Kaltstromleitung und/oder die Warmstromleitung aus.

Vorzugsweise weist das Außengehäuse, in einem Bereich in dem es als Wärmeübertragungsfläche des Wärmetauschers wirkt, an dessen Innenseite und/oder an dessen Außenseite, Rippen auf. Durch die Rippen kann die Temperaturübertragung bzw. Wärmeübertragung verbessert werden. Die Rippen können auch zur Ausbildung von Kanälen der Kaltstromleitung und/oder der Warmstromleitung dienen.

Kanäle und Leitungen der Kaltstromleitung und/oder der Warmstromleitung können alternativ oder zusätzlich durch das das Außengehäuse bereichsweise umgebende Gehäuse gebildet werden, das zur Ausbildung der Kaltstromleitung und/oder der Warmstromleitung an der dem Außengehäuse abgewandten Seite dient. Das Gehäuse kann zur Ausbildung der Kanäle Rippen aufweisen.

Der Innenbehälter und das Außengehäuse der Kryotankvorrichtung weisen bevorzugt eine Zylinderform auf.

Bevorzugt verlaufen die Kaltstromleitung und die Warmstromleitung entlang einer Längsrichtung des Außengehäuses. Der Wärmetauscher ist somit axial, in Längsrichtung verlaufend an der Mantelfläche des Kryotanks angeordnet. Der Wärmetauscher, somit die Kaltstromleitung und die Warmstromleitung, können bevorzugt eine U-Form aufweisen.

In einer anderen Ausführungsform verlaufen die Kaltstromleitung und die Warmstromleitung, und somit der Wärmetauscher, entlang des Umfangs des Außengehäuses, also bevorzugt entlang des Umfangs der Mantelfläche eines zylindrischen Kryotanks.

In einer anderen Ausführungsform verlaufen die Kaltstromleitung und die Warmstromleitung, und somit der Wärmetauscher, an einer Stirnseite des Außengehäuses, sind also stirnseitig angeordnet. Besonders bevorzugt weist der Wärmetauscher, also die Kaltstromleitung und die Warmstromleitung, im Wesentlichen eine Kreisform auf, die an der Stirnseite umläuft.

Der Wärmetauscher, somit die Kaltstromleitung und die Warmstromleitung, weist bevorzugt eine Stabform, U-Form, Kreisform oder Kreissegmentform auf.

Vorzugsweise umfasst die Warmstromleitung und/oder die Kaltstromleitung mehrere parallel und/oder seriell verlaufende Kanäle und/oder Leitungen. Der Wärmetauscher, insbesondere die Warmstromleitung und/oder die Kaltstromleitung, kann für einen Gleichstrom- oder Gegenstrombetrieb ausgebildet sein.

Bevorzugt ist die Warmstromleitung zumindest abschnittsweise breiter ausgebildet, als die Kaltstromleitung in einem gegenüberliegenden Abschnitt. Eine breitere Ausführung der Wärmeträgermediumseite verhindert die Bildung von Kaltstellen an der Außenseite der Vakuumhülle, also des Außengehäuses, zur Vermeidung von Verletzungsrisiken sowie von Eisbildung oder gar Sauerstoffkondensation.

Bevorzugt ist an der vom Außengehäuse abgewandten Seite der Warmstromleitung eine thermische Isolierung angebracht, also außerhalb des Außengehäuses. Eine zusätzliche thermische Isolierung der warmen Seite des Wärmetauschers verringert die Wärmeverluste an die Umgebung.

Vorzugsweise umfasst die Kryotankvorrichtung zumindest einen weiteren Wärmetauscher zur Wärmeübertragung an das kryogene Medium, wobei der weitere Wärmetauscher seriell oder parallel zum oben beschriebenen Wärmetauscher eingerichtet ist.

Bevorzugt ist auch der weitere Wärmetauscher mit Merkmalen des Wärmetauschers wie zuvor beschrieben ausgebildet und weist somit eine Kaltstromleitung auf, die an der Innenseite des Außengehäuses angeordnet ist und eine Warmstromleitung, die an der Außenseite des Außengehäuses angeordnet ist, so dass das Außengehäuse als Wärmeübertragungsfläche des weiteren Wärmetauschers wirkt.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer erfindungsgemäßen Kryotankvorrichtung.
- Fig. 2: ist eine schematische Darstellung einer erfindungsgemäßen Kryotankvorrichtung gemäß Fig. 1, von der Seite (Fig. 2a), ein Detail davon (Fig. 2b), von oben an der Außenseite des Außengehäuses (Fig. 2c) und von oben an der Innenseite des Außengehäuses (Fig. 2d).
- Fig. 3: ist eine schematische Darstellung einer erfindungsgemäßen Kryotankvorrichtung in einer zweiten Ausführungsform, von der Seite (Fig. 3a), von der Stirnseite her (Fig. 3b) und ein Detail davon (Fig. 3c).
- Fig. 4: ist eine schematische Darstellung einer erfindungsgemäßen Kryotankvorrichtung in einer dritten Ausführungsform, von der Seite (Fig. 4a), ein Detail davon (Fig. 4b), von der Stirnseite her an der Außenseite des Außengehäuses (Fig. 4c) und von der Stirnseite her an der Innenseite des Außengehäuses (Fig. 4d).

### Detaillierte Beschreibung der Erfindung

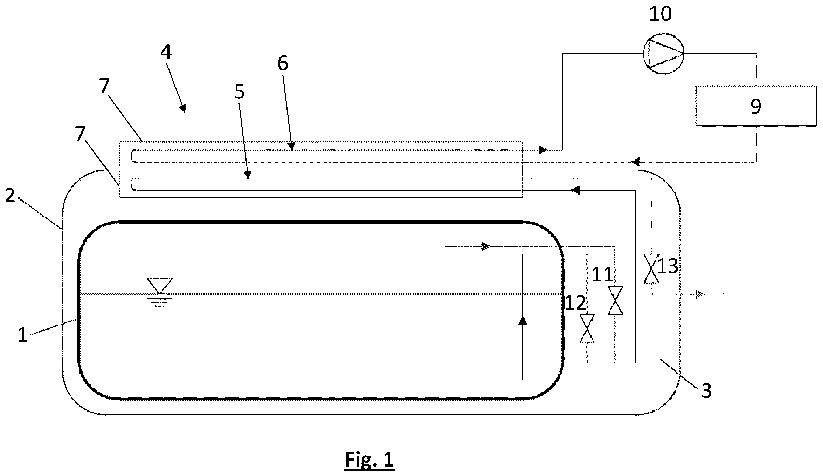

In Fig. 1 ist eine erfindungsgemäße Kryotankvorrichtung dargestellt. Die Kryotankvorrichtung umfasst einen Innenbehälter 1 zur Aufnahme eines kryogenen Mediums, insbesondere von Wasserstoff, und ein den Innenbehälter 1 umgebendes Außengehäuse 2, wobei zwischen Innenbehälter 1 und Außengehäuse 2 ein Isolationsraum 3, insbesondere ein Vakuumraum eingerichtet ist.

Die Kryotankvorrichtung umfasst zumindest einen Wärmetauscher 4, wobei der Wärmetauscher 4 eine Kaltstromleitung 5 umfasst, die zur Durchströmung von dem im Innenbehälter 1 aufgenommenen kryogenen Medium eingerichtet ist, wobei der Wärmetauscher 4 eine Warmstromleitung 6 umfasst, die zur Durchströmung von einem Temperiermedium eingerichtet ist.

Dabei bezieht die Warmstromleitung 6 Wärme von einer Wärmequelle 9, beispielsweise als Abwärme einer anderen Komponente. Der Kreislauf des Temperiermediums durch die Warmstromleitung 6 kann durch eine Wärmeträgerpumpe 10 aufrecht gehalten werden.

Das kryogene Medium für die Kaltstromleitung 5 wird aus dem Innenbehälter 1 entnommen, beispielsweise gasförmig, über ein Gasentnahmeventil 11, und/oder flüssig, über ein Flüssigentnahmeventil 12 und kann nach dem Wärmetauscher 4 über ein Wasserstoffentnahmeventil 13 zu einem Verbraucher gelangen, beispielsweise zu einer Brennstoffzelle.

Die Kaltstromleitung 5 und die Warmstromleitung 6 des Wärmetauschers 4 sind entlang einer Wärmeübertragungsfläche derart miteinander in Kontakt und/oder benachbart angeordnet, dass es zu einer Wärmeübertragung zwischen dem Temperiermedium in der Warmstromleitung 6 und dem kryogenen Medium in der Kaltstromleitung 5 über die Wärmeübertragungsfläche kommt. Dabei ist die Kaltstromleitung 5 an der Innenseite des Außengehäuses 2 angeordnet ist und die Warmstromleitung 6 an der Außenseite des Außengehäuses 2 angeordnet, so dass die entsprechenden Bereiche des Außengehäuses 2 selbst als Wärmeübertragungsfläche des Wärmetauschers 4 wirken.

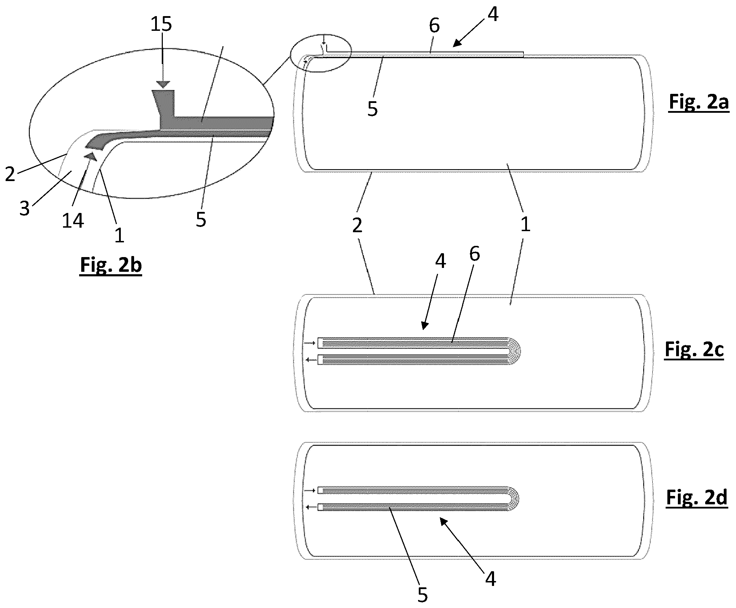

Der Wärmetauscher 4, bzw. die Kaltstromleitung 5 und die Warmstromleitung 6, können an verschiedenen Positionen am Außengehäuse 2 angeordnet sein. So zeigen die Fig. 1 und die Fig. 2 a bis d eine Ausführungsform einer Kryotankvorrichtung bei der die Kaltstromleitung 5 und die Warmstromleitung 6 entlang einer Längsrichtung des zylindrischen Außengehäuses 2 verlaufen. Der Wärmetauscher 4, bzw. die Kaltstromleitung 5 und die Warmstromleitung 6, verlaufen dabei U-förmig entlang der Längsachse des Zylindermantels.

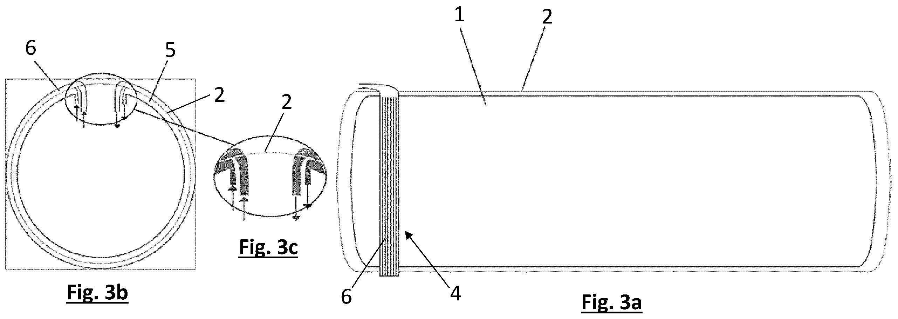

Die Fig. 3 a bis c zeigen eine Ausführungsform einer Kryotankvorrichtung bei der der Wärmetauscher 4, bzw. die Kaltstromleitung 5 und die Warmstromleitung 6, entlang des Umfangs des zylindrischen Außengehäuses 2 verlaufen.

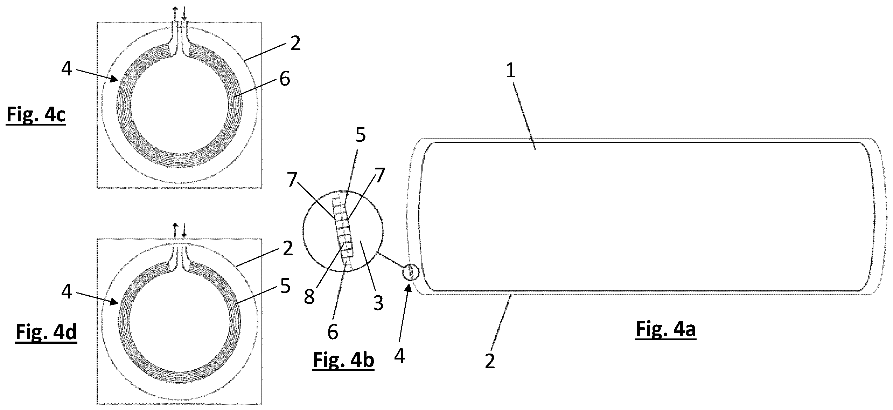

Die Fig. 4 a bis d zeigen eine weitere Ausführungsform einer Kryotankvorrichtung, bei der der Wärmetauscher 4, bzw. die Kaltstromleitung 5 und die Warmstromleitung 6, an einer Stirnseite des Außengehäuses 2 ausgebildet sind, nämlich in Form eines Kreises oder genauer eines Kreissegments das annähernd einen Kreis ausbildet.

Wie in der Detaildarstellung Fig. 2b erkennbar, ist ein Zufluss 14 zur Kaltstromleitung 5 im Isolationsraum 3 ausgebildet und ein Zufluss 15 zur Warmstromleitung 6 Außerhalb des Außengehäuses 2 ausgebildet.

Die Fig. 2c zeigt die Kryotankvorrichtung von oben an der Außenseite des Außengehäuses, die Fig. 2d von oben an der Innenseite des Außengehäuses. Kaltstromleitung 5 und Warmstromleitung 6 sind jeweils, entlang ihres Verlaufs am Außengehäuse 2, einander gegenüberliegend angeordnet.

Die Fig. 3b und 3c zeigen durch Pfeile die Zuläufe und Abläufe der Kaltstromleitung 5 und Warmstromleitung 6 in der dargestellten Ausführungsform.

Die Detaildarstellung Fig. 4b zeigt schließlich einen erfindungsgemäßen Wärmetauscher 4 seitlich geschnitten. Das Außengehäuse 2 bildet einen Sektor in Umfangsrichtung der Kaltstromleitung 5 und der Warmstromleitung 6 aus. Die Kaltstromleitung 5 und die Warmstromleitung 6 sind zumindest abschnittsweise durch das Außengehäuse 2 und durch ein das Außengehäuse 2 bereichsweise umgebendes Gehäuse 7 gebildet. Das Außengehäuse 2 weist in einem Bereich in dem es als Wärmeübertragungsfläche des Wärmetauschers 4 wirkt, an dessen Innenseite und an dessen Außenseite, Rippen 8 auf. Die Warmstromleitung 6 und die Kaltstromleitung 5 umfassen mehrere parallel verlaufende Kanäle, die durch die Rippen 8 getrennt sind.

Die Warmstromleitung 6 ist, zumindest in dem in Fig. 4b gezeigten Abschnitt, breiter ausgebildet als die gegenüberliegende Kaltstromleitung 5 im selben Abschnitt.

An der vom Außengehäuse 2 abgewandten Seite der Warmstromleitung 6 kann zusätzliche eine thermische Isolierung angebracht sein, die beispielsweise ein weiteres, die Warmstromleitung 6 umgebendes Gehäuse umfassen kann.

Erfindungsgemäß wird somit die Vakuumhülle, also das Außengehäuse 2, eines Kryotanks teilweise als Wärmeübertragerfläche zwischen dem Kryofluid und dem Wärmeträgermedium genutzt, der Wärmetauscher ist somit in der Vakuumhülle integriert.

Zur Vergrößerung der übertragenen Wärme kann die für die Wärmeübertragung genutzte Fläche (beidseitig oder nur wärmeträgermediumsseitig) der Vakuumhülle mit Rippen 8 versehen und eine entsprechende Einhausung 7 darüber verbaut werden. Der Wärmeübertrager kann am Mantel axial (Fig. 2), in Umfangsrichtung (Fig. 3) oder stirnseitig (Fig. 4) in die Vakuumhülle, also das Außengehäuse 2, integriert werden. Der Wärmeübertrager kann nach Gleichstrom- oder im Gegenstromprinzip betrieben werden. Eine breitere Ausführung der Wärmeträgermediumseite verhindert die Bildung von Kaltstellen an der Außenseite der Vakuumhülle zur Vermeidung von Verletzungsrisiken sowie Eisbildung oder gar Sauerstoffkondensation. Eine zusätzliche thermische Isolierung der Warmstromleitung 6 - insbesondere der "EGW-Seite", wobei EGW für ein Ethylenglykol-Wasser Gemisch als mögliches Temperiermedium steht - verringert Wärmeverluste an die Umgebung.

### Bezugszeichenliste

- 1: Innenbehälter
- 2: Außengehäuse
- 3: Isolationsraum
- 4: Wärmetauscher
- 5: Kaltstromleitung
- 6: Warmstromleitung
- 7: Gehäuse
- 8: Rippen
- 9: Wärmequelle
- 10: Wärmeträgerpumpe
- 11: Gasentnahmeventil
- 12: Flüssigentnahmeventil
- 13: Wasserstoffentnahmeventil
- 14: Zufluss Kaltstromleitung
- 15: Zufluss Warmstromleitung

## Patentansprüche

1. Kryotankvorrichtung, umfassend einen Innenbehälter (1) zur Aufnahme eines kryogenen Mediums, insbesondere von Wasserstoff, und ein den Innenbehälter (1) umgebendes Außengehäuse (2), wobei zwischen Innenbehälter (1) und Außengehäuse (2) ein Isolationsraum (3) eingerichtet ist, wobei die Kryotankvorrichtung zumindest einen Wärmetauscher (4) umfasst, wobei der Wärmetauscher (4) zumindest eine Kaltstromleitung (5) umfasst, die zur Durchströmung von dem im Innenbehälter (1) aufgenommenen kryogenen Medium eingerichtet ist, wobei der Wärmetauscher (4) zumindest eine Warmstromleitung (6) umfasst, die zur Durchströmung von einem Temperiermedium eingerichtet ist, wobei die Kaltstromleitung (5) und die Warmstromleitung (6) entlang einer Wärmeübertragungsfläche derart miteinander in Kontakt sind und/oder benachbart angeordnet sind, dass es zu einer Wärmeübertragung zwischen dem Temperiermedium und dem kryogenen Medium über die Wärmeübertragungsfläche kommt,
**dadurch gekennzeichnet , dass** die Kaltstromleitung (5) an der Innenseite des Außengehäuses (2) angeordnet ist und die Warmstromleitung (6) an der Außenseite des Außengehäuses (2) angeordnet ist, so dass ein Abschnitt des Außengehäuses (2) als Wärmeübertragungsfläche des Wärmetauschers (4) wirkt, wobei die Warmstromleitung (6) Wärme von einer Wärmequelle (9), beispielsweise als Abwärme einer anderen Komponente, bezieht, wobei ein Kreislauf des Temperiermediums durch die Warmstromleitung (6) durch eine Wärmeträgerpumpe (10) aufrecht gehalten wird.

2. Kryotankvorrichtung nach Anspruch 1,
**dadurch gekennzeichnet , dass** das Außengehäuse (2) zumindest einen Sektor in Umfangsrichtung der Kaltstromleitung (5) und/oder der Warmstromleitung (6) ausbildet.

3. Kryotankvorrichtung nach zumindest einem der vorhergehenden Ansprüche,
**dadurch gekennzeichnet , dass** die Kaltstromleitung (5) und/oder die Warmstromleitung (6) zumindest abschnittsweise durch das Außengehäuse (2) und durch ein das Außengehäuse (2) bereichsweise umgebendes Gehäuse (7) gebildet ist.

4. Kryotankvorrichtung nach zumindest einem der vorhergehenden Ansprüche,
**dadurch gekennzeichnet , dass** das Außengehäuse (2) in einem Bereich in dem es als Wärmeübertragungsfläche des Wärmetauschers (4) wirkt, an dessen Innenseite und/oder an dessen Außenseite, Rippen (8) aufweist.

5. Kryotankvorrichtung nach zumindest einem der vorhergehenden Ansprüche,
**dadurch gekennzeichnet , dass** die Kaltstromleitung (5) und die Warmstromleitung (6) entlang einer Längsrichtung des Außengehäuses (2) verlaufen oder entlang des Umfangs des Außengehäuses (2) verlaufen oder an einer Stirnseite des Außengehäuses (2) ausgebildet sind.

6. Kryotankvorrichtung nach zumindest einem der vorhergehenden Ansprüche,
**dadurch gekennzeichnet , dass** die Warmstromleitung (6) und/oder die Kaltstromleitung (5) mehrere parallel und/oder seriell verlaufende Kanäle und/oder Leitungen umfasst, oder dass der Wärmetauscher (4), insbesondere die Warmstromleitung (6) und/oder die Kaltstromleitung (5), für einen Gleichstrom- oder Gegenstrombetrieb ausgebildet ist.

7. Kryotankvorrichtung nach zumindest einem der vorhergehenden Ansprüche,
**dadurch gekennzeichnet , dass** die Warmstromleitung (6) zumindest abschnittsweise breiter ausgebildet ist, als die Kaltstromleitung (5) in einem gegenüberliegenden Abschnitt.

8. Kryotankvorrichtung nach zumindest einem der vorhergehenden Ansprüche,
**dadurch gekennzeichnet , dass** an der vom Außengehäuse (2) abgewandten Seite der Warmstromleitung (6) eine thermische Isolierung angebracht ist.

9. Kryotankvorrichtung nach zumindest einem der vorhergehenden Ansprüche,
**dadurch gekennzeichnet , dass** die Kryotankvorrichtung zumindest einen weiteren Wärmetauscher zur Wärmeübertragung an das kryogene Medium umfasst, wobei der weitere Wärmetauscher seriell oder parallel zum Wärmetauscher (4) eingerichtet ist.

10. Kryotankvorrichtung nach zumindest einem der vorhergehenden Ansprüche,
**dadurch gekennzeichnet , dass** der weitere Wärmetauscher mit Merkmalen des Wärmetauschers (4) nach zumindest einem der vorhergehenden Ansprüche ausgebildet ist.

## Claims

1. Cryogenic tank apparatus, comprising an inner container (1) for holding a cryogenic medium, in particular hydrogen, and an outer housing (2) surrounding the inner container (1), wherein an insulation space (3) is disposed between the inner container (1) and the outer housing (2), wherein the cryogenic tank apparatus comprises at least one heat exchanger (4), wherein the heat exchanger (4) comprises at least one cold flow line (5) which is adapted to be flowed through by the cryogenic medium held in the inner container (1), wherein the heat exchanger (4) comprises at least one hot flow line (6) which is adapted to be flowed through by a temperature control medium, wherein the cold flow line (5) and the hot flow line (6) are in contact with one another and/or are arranged adjacent to one another along a heat transfer surface in such a manner that a transfer of heat takes place between the temperature control medium and the cryogenic medium by way of the heat transfer surface,
**characterized in that** the cold flow line (5) is arranged on the inner side of the outer housing (2) and the hot flow line (6) is arranged on the outer side of the outer housing (2), so that a portion of the outer housing (2) acts as the heat transfer surface of the heat exchanger (4)
wherein the hot flow line (6) draws heat from a heat source (9), for example as waste heat from another component, wherein a cycle of the temperature control medium is maintained through the hot flow line (6) by a heat transfer pump (10).

2. Cryogenic tank apparatus according to Claim 1,
**characterized in that** the outer housing (2) forms at least one sector in the peripheral direction of the cold flow line (5) and/or of the hot flow line (6).

3. Cryogenic tank apparatus according to at least one of the preceding claims,
**characterized in that** the cold flow line (5) and/or the hot flow line (6) is formed at least in part by the outer housing (2) and by a housing (7) which surrounds the outer housing (2) in some regions.

4. Cryogenic tank apparatus according to at least one of the preceding claims,
**characterized in that** the outer housing (2), in a region in which it acts as the heat transfer surface of the heat exchanger (4), has fins (8) on its inner side and/or on its outer side.

5. Cryogenic tank apparatus according to at least one of the preceding claims,
**characterized in that** the cold flow line (5) and the hot flow line (6) run in a longitudinal direction of the outer housing (2) or run along the periphery of the outer housing (2) or are formed on an end face of the outer housing (2).

6. Cryogenic tank apparatus according to at least one of the preceding claims,
**characterized in that** the hot flow line (6) and/or the cold flow line (5) comprises a plurality of channels and/or lines running in parallel and/or in series, or **in that** the heat exchanger (4), in particular the hot flow line (6) and/or the cold flow line (5), is configured for co-current or counter-current operation.

7. Cryogenic tank apparatus according to at least one of the preceding claims,
**characterized in that** the hot flow line (6) is wider at least in a portion than the cold flow line (5) in an opposite portion.

8. Cryogenic tank apparatus according to at least one of the preceding claims,
**characterized in that** a thermal insulation is fitted on the side of the hot flow line (6) that is remote from the outer housing (2).

9. Cryogenic tank apparatus according to at least one of the preceding claims,
**characterized in that** the cryogenic tank apparatus comprises at least one further heat exchanger for transferring heat to the cryogenic medium, wherein the further heat exchanger is disposed in series or in parallel with the heat exchanger (4).

10. Cryogenic tank apparatus according to at least one of the preceding claims,
**characterized in that** the further heat exchanger is configured with features of the heat exchanger (4) according to at least one of the preceding claims.

## Revendications

1. Dispositif formant réservoir cryogénique, comprenant un récipient interne (1) destiné à recevoir un agent cryogène, en particulier de l'hydrogène, et un boîtier externe (2) entourant le récipient interne (1), un espace d'isolation (3) étant conçu entre le récipient interne (1) et le boîtier externe (2), le dispositif formant réservoir cryogénique comprenant au moins un étanche de chaleur (4), l'échangeur de chaleur (4) comprenant au moins une conduite (5) à flux froid, qui est conçue pour l'écoulement de l'agent cryogène logé dans le récipient interne (1), l'échangeur de chaleur (4) comprenant au moins une conduite (6) à flux chaud, qui est conçue pour l'écoulement d'un agent de régulation de la température, la conduite (5) à flux froid et la conduite (6) à flux chaud étant en contact l'une avec l'autre et/ou agencées de manière adjacente le long d'une surface de transfert de chaleur de telle sorte qu'on obtient un transfert de chaleur entre l'agent de régulation de la température et l'agent cryogène par l'intermédiaire de la surface de transfert de chaleur,
**caractérisé en ce que** la conduite (5) à flux froid est agencée sur le côté interne du boîtier externe (2) et la conduite (6) à flux chaud est agencée sur le côté externe du boîtier externe (2) de telle sorte qu'une section du boîtier externe (2) agit comme surface de transfert de chaleur de l'échangeur de chaleur (4), la conduite (6) à flux chaud recevant de la chaleur à partir d'une source de chaleur (9), par exemple en tant que chaleur résiduelle d'un autre composant, un circuit de l'agent de régulation de la température à travers la conduite (6) à flux chaud étant maintenu par une pompe (10) à agent caloporteur.

2. Dispositif formant réservoir cryogénique selon la revendication 1,
**caractérisé en ce que** le boîtier externe (2) forme au moins un secteur dans la direction périphérique de la conduite (5) à flux froid et/ou de la conduite (6) à flux chaud.

3. Dispositif formant réservoir cryogénique selon au moins l'une des revendications précédentes,
**caractérisé en ce que** la conduite (5) à flux froid et/ou la conduite (6) à flux chaud est/sont formée(s) au moins par sections par le boîtier externe (2) et par un boîtier (7) entourant, par zones, le boîtier externe (2).

4. Dispositif formant réservoir cryogénique selon au moins l'une des revendications précédentes,
**caractérisé en ce que** le boîtier externe (2) présente, dans une zone dans laquelle il agit en tant que surface de transfert de chaleur de l'échangeur de chaleur (4), au niveau de sa face interne et/ou de sa face externe, des nervures (8).

5. Dispositif formant réservoir cryogénique selon au moins l'une des revendications précédentes,
**caractérisé en ce que** la conduite (5) à flux froid et la conduite (6) à flux chaud s'étendent le long d'une direction longitudinale du boîtier externe (2) ou s'étendent le long de la périphérie du boîtier externe (2) ou sont réalisées au niveau d'une face frontale du boîtier externe (2).

6. Dispositif formant réservoir cryogénique selon au moins l'une des revendications précédentes,
**caractérisé en ce que** la conduite à flux chaud (6) et/ou la conduite à flux froid (5) comprend plusieurs canaux et/ou conduites s'étendant en parallèle et/ou en série ou **en ce que** l'échangeur de chaleur (4), en particulier la conduite (6) à flux chaud et/ou la conduite (5) à flux froid, est réalisé pour un fonctionnement à courant parallèle ou à contre-courant.

7. Dispositif formant réservoir cryogénique selon au moins l'une des revendications précédentes,
**caractérisé en ce que** la conduite (6) à flux chaud est réalisée, au moins par sections, plus large que la conduite (5) à flux froid dans une section opposée.

8. Dispositif formant réservoir cryogénique selon au moins l'une des revendications précédentes,
**caractérisé en ce qu'**une isolation thermique est appliquée sur la face opposée au boîtier externe (2) de la conduite (6) à flux chaud.

9. Dispositif formant réservoir cryogénique selon au moins l'une des revendications précédentes,
**caractérisé en ce que** le dispositif formant réservoir cryogénique comprend au moins un autre échangeur de chaleur pour le transfert de chaleur à l'agent cryogène, l'autre échangeur de chaleur étant conçu en série ou en parallèle par rapport à l'échangeur de chaleur (4).

10. Dispositif formant réservoir cryogénique selon au moins l'une des revendications précédentes,
**caractérisé en ce que** l'autre échangeur de chaleur est réalisé avec des caractéristiques de l'échangeur de chaleur (4) selon au moins l'une des revendications précédentes.
